# FASCICULE DE BREVET EUROPEEN

(11) **EP 2 247 503 B1**
(45) Date de publication et mention de la délivrance du brevet: **15.10.2014**
(21) Numéro de dépôt: 09720401.0
(22) Date de dépôt: 09.01.2009
(51) Int. Cl.: B64D 27/18

(54) **STRUCTURE D'ACCROCHAGE POUR TURBORÉACTEUR**
STRUKTUR ZUR ANBRINGUNG EINES TURBOSTRAHLMOTORS
ATTACHMENT STRUCTURE FOR A TURBOJET ENGINE

(30) Priorité: 07.03.2008 FR 0801264
(43) Date de publication de la demande: 10.11.2010
(73) Titulaire: Aircelle, 76700 Gonfreville l'Orcher (FR)
(72) Inventeur: VAUCHEL, Guy, Bernard, 76600 Le Havre (FR); BAILLARD, André, 76110 Bretteville du Gran Caux (FR); CONTE, François, 31170 Tournefeuille (FR)
(74) Mandataire: Gaillarde, Frédéric F. Ch.
(86) Numéro de dépôt international: PCT/FR2009/000022
(87) Numéro de publication internationale: WO 2009/112669

(56) Documents cités:
- EP-A- 1 571 082
- WO-A-93/02920
- WO-A-2007/033993
- FR-A- 2 885 877
- FR-A- 2 887 521
- FR-A- 2 891 254
- FR-A- 2 891 526
- US-A- 3 848 832

## Description

La présente invention se rapporte à une structure d'accrochage pour turboréacteur d'aéronef.

Un avion est propulsé par plusieurs turboréacteurs logés chacun dans une nacelle abritant également un ensemble de dispositifs d'actionnement annexes liés à son fonctionnement, tel qu'un dispositif d'inversion de poussée, et assurant diverses fonctions lorsque le turboréacteur est en fonctionnement ou à l'arrêt.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur (ou une structure interne de la structure aval de la nacelle et entourant le turboréacteur) et une paroi interne de la nacelle. Les deux flux d'air sont éjectés du turboréacteur par l'arrière de la nacelle.

Chaque ensemble propulsif de l'avion est donc formé par une nacelle et un turboréacteur, et est suspendu à une structure fixe de l'avion, par exemple sous une aile ou sur le fuselage, par l'intermédiaire d'un pylône, ou mât, rattaché au turboréacteur dans sa partie avant et arrière par des suspensions, l'ensemble formant une interface de liaison entre le turboréacteur et la structure fixe de l'avion de manière à assurer la transmission à la structure de l'avion des efforts générés par ledit turboréacteur.

Dans une telle configuration, c'est le turboréacteur qui supporte la nacelle.

Afin d'assurer la transmission des efforts, le pylône comporte une structure rigide, souvent du type caisson, c'est-à-dire formée par l'assemblage de longerons supérieurs et inférieurs et de panneaux latéraux raccordés entre eux par l'intermédiaire de nervures transversales.

D'autre part, le pylône est muni d'un système de montage interposé entre le turboréacteur et la structure rigide du pylône, ce système comportant globalement au moins deux attaches moteur, généralement au moins une attache avant et au moins une attache arrière.

De plus, le système de montage comprend un dispositif de reprise des efforts de poussée générés par le turboréacteur se présentant classiquement sous la forme de bielles latérales raccordées, d'une part, en partie arrière du carter de soufflante, et d'autre part, à une attache arrière fixe sur le carter central de ce dernier.

De la même manière, le pylône comporte également un second système de montage interposé entre la structure rigide du pylône et la partie fixe de l'avion à laquelle il est destiné à être rattaché.

Un pylône classique de l'art antérieur prend donc grossièrement la forme d'un caisson parallélépipédique, disposant de grandes dimensions afin de pouvoir reprendre la totalité des efforts générés par le turboréacteur associé.

Ce pylône provoque alors des perturbations importantes dans le flux secondaire s'échappant du canal annulaire de soufflante, ce qui se traduit par une traînée plus importante.

Par ailleurs, une telle architecture est soumise à de nombreux efforts externes conjugués lors de la mission de l'avion. Il s'agit entre autre d'efforts résultants de la gravité, des efforts aérodynamiques externes et internes, rafales, effets thermiques.

Ces contraintes appliquées à l'ensemble propulsif sont transmises au turboréacteur et entraînent des déformées de carters qui impactent directement le rendement des différents étages du turboréacteur. Plus particulièrement, dans le cas d'un ensemble propulsif dit en taille de guêpe, c'est-à-dire présentant une partie aval longue et relativement fine par rapport aux structures intermédiaires et d'entrée d'air, ces contraintes résultent en une déformation particulièrement préjudiciable appelée « mise en banane », la partie aval se courbant de manière importante.

Une telle « mise en banane » se traduit par une déformation de la structure externe de la nacelle formée par les différents carters successifs tandis que l'arbre d'entraînement, les aubes de la soufflante et aubes internes du turboréacteur restent rectilignes. Il s'ensuit un rapprochement des têtes d'aubes de l'arbre vers la périphérie interne des carters. La performance générale du turboréacteur s'en trouve réduite par rapport à une configuration dans laquelle les carters ne subissent pas ou très peu de déformations, car il convient alors de tenir compte de cette déformation dans la conception de la nacelle de manière à toujours ménager un jeu suffisant entre les têtes d'aubes et la périphérie des carters. Ceci résulte en une partie de l'air d'alimentation qui n'est pas compressé par les aubes car fuyant à travers ce jeu important.

Le document FR 2 885 877 décrit un mât d'accrochage comportant un caisson central et deux caissons latéraux solidaires du caisson central et équipés de moyens d'attache destinés à reprendre les efforts générés par le turboréacteur.

Selon ce système, la reprise des efforts s'effectue alors par l'intermédiaire des caissons latéraux prévus à cet effet. Les efforts de poussée passant par les moyens d'attache des caissons transitent par les peaux de ces caissons avant d'arriver au caisson central longitudinal puis vers l'arrière du pylône.

Toutefois, un système selon le document FR 2 885 877 et FR 2 891 526 présente l'inconvénient que les caissons latéraux sont intégrés au mât et ne peuvent en être dissociés. Il s'ensuit que l'interface de démontage de l'ensemble propulsif n'est pas facilement accessible. Notamment, le turboréacteur est généralement entouré d'une nacelle, le rattachement de l'ensemble étant grandement compliqué du fait que les caissons doivent être insérés à travers la nacelle pour venir être attachés sur le turboréacteur.

La présente invention vise à proposer une autre solution permettant d'éviter les inconvénients précédemment évoqués tout en assurant une reprise des efforts optimale, et a pour objet à cet effet une structure d'accrochage d'un turboréacteur à une structure fixe d'un avion par l'intermédiaire d'un mât d'accrochage, ladite structure comprenant un caisson monobloc destiné à s'étendre partiellement de part et d'autre autour d'un carter de soufflante du turboréacteur autour d'un axe sensiblement longitudinal de ce dernier et comportant, d'une part, des moyens d'attache au pylône, et d'autre part, des moyens d'attache moteur agencés sur le caisson de part et d'autre d'un axe sensiblement longitudinal du turboréacteur et destinés à être reliés à une partie du turboréacteur de manière à reprendre les efforts s'exerçant sur ce dernier.

Ainsi, en prévoyant une structure caissonnée monobloc indépendante du pylône, celle-ci peut aisément être intégrée à l'ensemble propulsif et rapportée sur le pylône. Elle facilite donc grandement le montage et le démontage de l'ensemble en permettant l'utilisation de l'interface de démontage du pylône et de l'ensemble propulsif. Par ailleurs, la présence d'une structure caissonnée monobloc non interrompue par le pylône permet une meilleure répartition globale et un meilleur équilibrage des efforts sur l'ensemble de la périphérie du caisson.

Selon une première variante de réalisation de l'invention, les moyens d'attache moteur sont destinés à être liés à un carter d'une soufflante. Avantageusement, les moyens d'attache moteur sont destinés à être fixés sur une portion aval du carter de soufflante habituellement nommé carter intermédiaire et qui est un carter structural.

Selon une deuxième variante de réalisation de l'invention, les moyens d'attache moteur sont destinés à être liés au turboréacteur au niveau d'un étage haute pression de ce dernier. La structure caissonnée peut alors chevauchée en tout ou partie une zone aval du carter de soufflante. Avantageusement, la fixation s'effectue par l'intermédiaire de bras de liaisons qui seront préférentiellement placés dans l'alignement de bras moteurs latéraux s'ils existent de manière à perturber le moins possible l'écoulement d'air dans le conduit secondaire de la nacelle.

De manière préférentielle, les moyens d'attache moteur sont agencés sur le caisson de manière à être situés sensiblement dans un plan horizontal proche d'un axe médian du turboréacteur.

Préférentiellement encore, les moyens d'attaches moteur sont de type rotulants.

Préférentiellement encore, la structure d'accrochage comprend deux moyens d'attache moteur latéraux.

Avantageusement, les moyens d'attache moteur sont agencés au niveau d'une excroissance locale du caisson orientée vers l'aval du carter.

De manière avantageuse, le caisson comprend des moyens d'attache additionnels se présentant sous la forme d'au moins une bielle disposée dans un plan sensiblement perpendiculaire à un axe longitudinal du turboréacteur, ladite bielle étant fixée par une première extrémité dans le caisson et est destinée à être fixée par une deuxième extrémité dans le carter.

Avantageusement encore, la bielle est disposée en partie supérieure du caisson sensiblement au voisinage des moyens d'attache au pylône.

Selon un premier mode de réalisation de l'invention, les moyens d'attache au pylône sont disposés sur une zone latérale aval du caisson.

Selon un deuxième mode de réalisation de l'invention les moyens d'attache au pylône sont disposés sur une face supérieure du caisson.

Avantageusement, le caisson comprend des moyens d'attache additionnels se présentant sous la forme d'au moins une bielle disposée sensiblement à proximité des moyens d'attache au pylône, ladite bielle étant fixée par une première extrémité dans le caisson et est destinée à être fixée par une deuxième extrémité dans ledit pylône.

Avantageusement encore, les moyens d'attache au pylône comprennent au moins un groin de centrage.

La présente invention se rapporte également à une unité d'accrochage pour turboréacteur comprenant, d'une part, un pylône lié à une structure fixe d'un avion, et d'autre part, une structure d'accrochage selon l'invention.

Avantageusement, le pylône déborde en amont de la structure d'accrochage.

La présente invention se rapporte encore à un ensemble propulsif comprenant un turboréacteur caractérisé en ce que le turboréacteur est lié à une unité d'accrochage selon l'invention.

Avantageusement, l'ensemble propulsif comprend une liaison arrière au moyen d'au moins un système de suspension présentant une première extrémité liée au pylône et une deuxième extrémité liée à une partie aval du turboréacteur.

La mise en oeuvre de l'invention sera mieux comprise à l'aide de la description détaillée qui est exposée ci-dessous en regard du dessin annexé dans lequel :
La figure 1 est une représentation schématique de côté d'une structure d'attache selon l'invention fixée à un turboréacteur.
La figure 2 est une représentation schématique de face de la structure d'attache et du turboréacteur de la figure 1
La figure 3 est une représentation schématique d'un mode de réalisation particulier d'une structure d'attache selon l'invention.
La figure 4 est une représentation schématique de côté d'une structure d'attache selon l'invention comprenant des bielles de support additionnelles.
La figure 5 est une représentation de face de la structure d'attache de la figure 4.
La figure 6 est une représentation schématique de côté d'une structure d'accrochage selon l'invention liée à un pylône selon une première variante de réalisation.
La figure 7 est une représentation vue de dessus de la structure d'accrochage de la figure 6 comprenant une liaison améliorée avec le pylône.
La figure 8 est une représentation schématique de côté d'une structure d'accrochage selon l'invention liée à un pylône selon une deuxième variante de réalisation.
La figure 9 est une représentation schématique vue du côté de la structure de la figure 8 comprenant une bielle additionnelle de liaison au pylône.
Les figures 10 à 12 sont d'autres représentations de disposition de bielles additionnelles.
La figure 13 est une représentation schématique d'une unité d'accrochage comprenant une suspension arrière de liaison au turboréacteur.
Les figures 14 et 15 sont des représentations, respectivement de face et de côté, d'une structure d'accrochage selon l'invention liée au turboréacteur au niveau d'un étage haute pression de ce dernier.

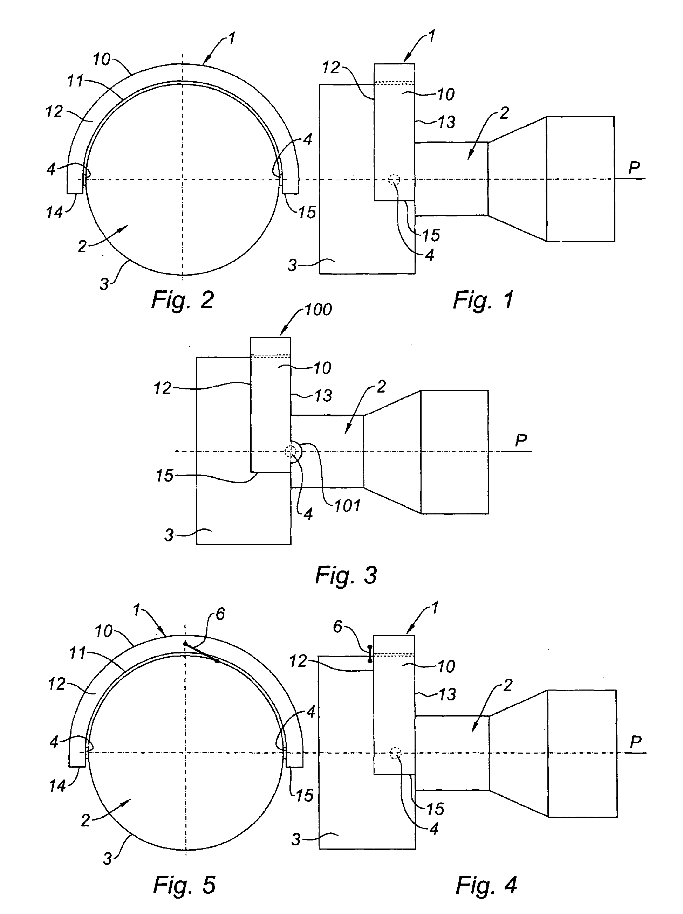

Une structure d'accrochage 1 selon l'invention, telle que représentée sur les figures 1 et 2 est destinée à supporter un turboréacteur 2.

La structure d'accrochage présente une structure caissonnée monobloc entourant un carter 3 d'une soufflante du turboréacteur 2 sur sensiblement une moitié supérieure de sa périphérie.

La structure monobloc caissonnée 1 est formée à partir d'un panneau externe 10, d'un panneau interne 11, d'un panneau latéral avant 12 et d'un panneau latéral arrière 13, et est fermée par deux panneaux latéraux 14, 15 d'extrémités.

Ainsi, la structure monobloc caissonnée 1 présente une structure caissonnée monobloc s'étendant de part et d'autre d'un axe longitudinal du turboréacteur 2 autour d'un carter 3 de la soufflante de ce dernier.

Chaque branche de la structure monobloc présente par ailleurs, une attache moteur 4 par laquelle la structure d'accrochage 1 est fixée au carter 3 de soufflante du turboréacteur.

L'accrochage sur le carter 3 s'effectue dans un plan P sensiblement horizontal proche d'un axe médian du turboréacteur.

Ces attaches moteurs 4 reprennent alors les efforts s'exerçant sur le turboréacteur 2 et permettent leur remontée vers le pylône 5 par l'intermédiaire de la structure caissonnée 1.

Leur localisation dans un plan P sensiblement horizontal proche de l'axe médian du turboréacteur 2 permet de limiter les efforts parasites du moteur vers la structure fixe de l'avion.

Les attaches moteur 4 peuvent en variante être de type rotulante. La position axiale de la rotule par rapport au caisson sera fonction de l'architecture générale du turboréacteur 2 et de son centre de gravité.

Comme représenté sur la figure 3, une structure caissonnée 100 monobloc peut présenter une excroissance 101 locale orientée vers l'aval de manière à permettre un positionnement des attaches moteur 4 le plus en aval possible sur le carter 3 de soufflante.

Dans sa configuration telle que représentée sur les figures 1 à 3, une structure d'accrochage 1, 100 selon l'invention reprend principalement les efforts axiaux dans le sens de l'axe moteur.

Une reprise des efforts latéraux peut être effectuée au moyen d'une ou plusieurs bielles additionnelles 6 tel que cela est représenté sur les figures 4 et 5.

Ces bielles additionnelles 6 présentent une première extrémité fixée dans la structure caissonnée 1 et une deuxième extrémité fixée dans le carter 3 de soufflante.

Avantageusement, les bielles additionnelles 6 sont disposées dans une zone supérieure de la structure caissonnée 1 à proximité d'une interface de liaison avec le pylône 5.

Bien évidemment, les bielles additionnelles 6 peuvent être placées en aval ou en amont de la structure caissonnée 1 selon la disposition géométrique de l'ensemble.

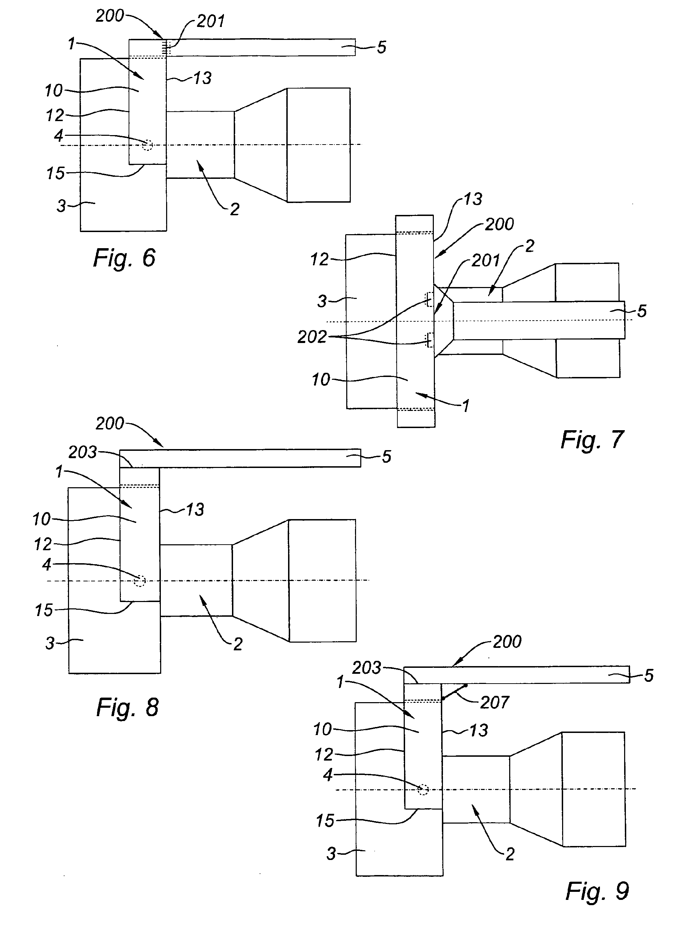

Différentes configurations d'attache à un pylône 5 sont représentées sur les figures 6 à 13 formant ainsi une unité d'accrochage 200.

Sur les figures 6 et 7, le pylône 5 est lié à la structure d'accrochage 1 par le biais d'une interface 201 d'assemblage située sur une face latérale aval 13 de la structure d'accrochage 1.

L'attache pourra se faire classiquement par ferrures, avantageusement par fixations démontables.

Comme représenté sur la figure 7, l'interface de fixation 201 avec le pylône 5 est élargie afin d'offrir une meilleure assise et une surface d'attache plus importante. Des points de passage d'effort dans les directions désirées peuvent être aménagés sur cette interface. L'interface pourra également comprendre un ou plusieurs groins de centrage 202.

En variante, comme représenté sur les figures 8 et 9, une interface de liaison 203 avec le pylône 5 peut être située dans le panneau supérieur 10 de la structure caissonnée 1. Une telle disposition offre une plus grande surface de jonction et une meilleure reprise des efforts.

Toutes les options mentionnées pour l'interface de liaison précédemment décrite sont bien évidemment possibles.

Afin d'ajouter de la raideur à la fixation si nécessaire, et comme cela est représenté aux figures 9 à 11, il est possible d'adjoindre à l'unité d'accrochage une ou plusieurs bielles additionnelles 207 présentant une première extrémité fixée dans la structure monobloc caissonnée 1 et une deuxième extrémité fixée dans le pylône 5.

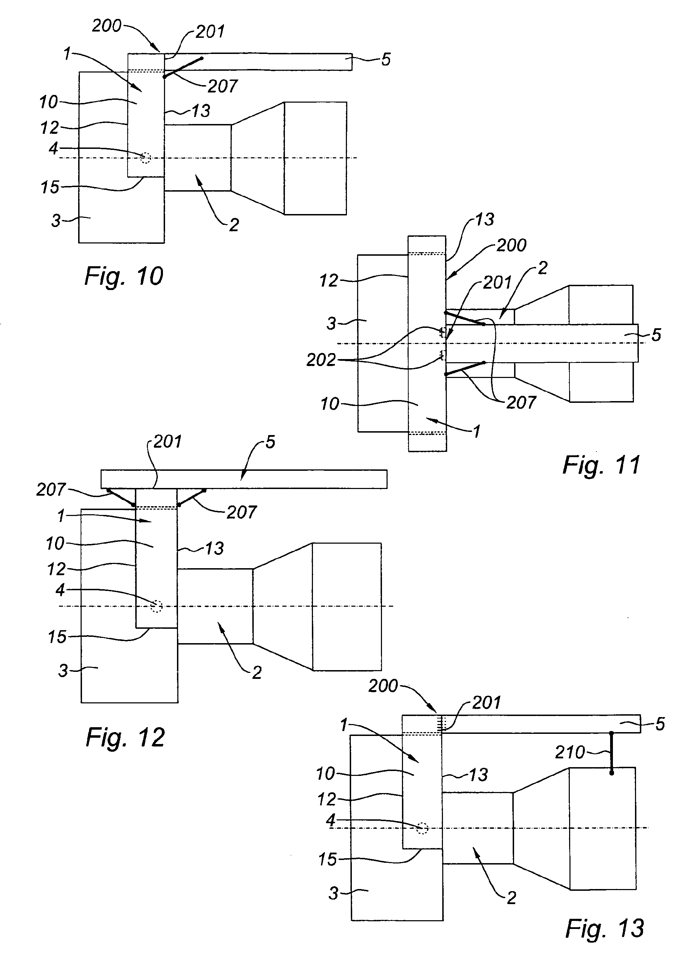

Les bielles additionnelles peuvent être localisées sous le pylône 5 (figure 9) mais encore être latérales au pylône 5 (figure 10, figure 11).

Comme représenté sur la figure 12, en variante, le pylône 5 peut déborder en amont de la structure monobloc caissonnée 1 afin de fournir une zone de liaison supplémentaire entre les deux éléments.

Les diverses options d'attache précédemment mentionnées sont bien évidemment également applicables. On pourra notamment prévoir des bielles additionnelles 207 de renfort à la fois vers l'amont et vers l'aval.

La figure 13 présente une unité d'accrochage selon l'invention équipée d'une suspension 210 arrière d'équilibrage comprenant une première extrémité fixée dans le pylône 5 et une deuxième extrémité fixée dans une partie aval du turboréacteur 2.

Une telle suspension est connue notamment de la demande française 06/08892 au nom de la demanderesse.

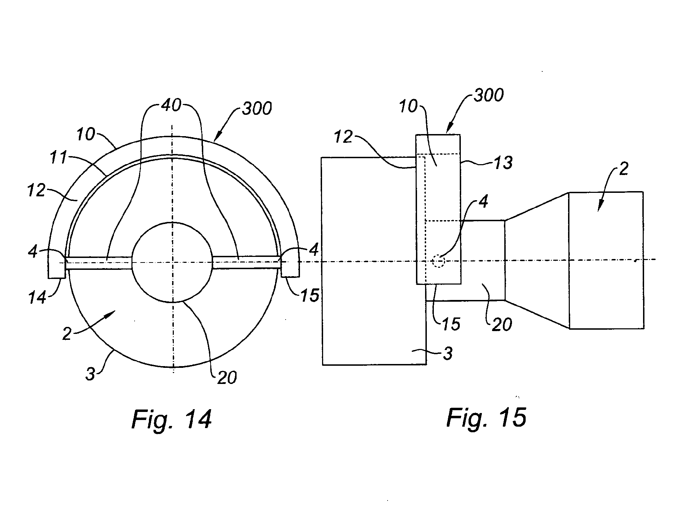

Les figures 14 et 15 présentent une autre variante de réalisation d'une structure d'accrochage 300 selon l'invention dans laquelle les points d'attache latéraux 4 sont liés au turboréacteur 2 au niveau d'un corps haute pression 20 de ce dernier.

La structure caissonnée 300 chevauche alors partiellement le carter 3 de soufflante. Les moyens d'attache 4 sont liés au corps haute pression par l'intermédiaire de bras 40 de liaison qui sont avantageusement placés dans l'alignement de bras moteurs latéraux s'ils existent afin de ne pas perturber l'écoulement de l'air dans le conduit secondaire de la nacelle. Les parties des bras 40 de liaison traversant le conduit secondaire seront avantageusement aérodynamiquement profilés. Les bras moteur latéraux peuvent intégrer cette excroissance afin de renforcer cette interface.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Structure d'accrochage (1, 100, 300) d'un turboréacteur (2) à une structure fixe d'un avion par l'intermédiaire d'un pylône (5) d'accrochage, comprenant un caisson et des moyens d'attache moteur (4) agencés sur le caisson de part et d'autre d'un axe sensiblement longitudinal du turboréacteur et destinés à être reliés à une partie du turboréacteur de manière à reprendre les efforts s'exerçant sur ce dernier, **caractérisée en ce que** ladite structure comporte des moyens d'attache (201, 203) du caisson au pylône, et le caisson est monobloc et est destiné à s'étendre au moins partiellement de part et d'autre d'un carter (3) de soufflante du turboréacteur autour d'un axe sensiblement longitudinal de ce denier.

2. Structure d'accrochage (1, 100) selon la revendication 1, **caractérisée en ce que** les moyens d'attache moteur (4) sont destinés à être liés à un carter (3) d'une soufflante.

3. Structure d'accrochage (1, 100) selon la revendication 2, **caractérisée en ce que** les moyens d'attache moteur (4) sont destinés à être fixés sur une portion aval du carter (3) de soufflante.

4. Structure d'accrochage (300) selon la revendication 1, **caractérisée en ce que** les moyens d'attache moteur (4) sont destinés à être liés au turboréacteur (2) au niveau d'un étage haute pression (20) de ce dernier.

5. Structure d'accrochage (1, 100, 300) selon l'une quelconque des revendications 1 à 4, **caractérisée en ce que** les moyens d'attache moteur (4) sont agencés sur le caisson de manière à être situés sensiblement dans un plan horizontal (P) proche d'un axe médian du turboréacteur (2).

6. Structure d'accrochage (1, 100, 300) selon l'une quelconque des revendications 1 à 5, **caractérisée en ce que** les moyens d'attaches moteur (4) sont de type roulants,

7. Structure d'accrochage (1, 100, 300) selon l'une quelconque des revendications 1 à 6, **caractérisée en ce qu'**elle comprend deux moyens d'attache moteur (4) latéraux.

8. Structure d'accrochage (100) selon l'une quelconque des revendications 1 à 6, **caractérisée en ce que** les moyens d'attache moteur (4) sont agencés au niveau d'une excroissance locale (101) du caisson orientée vers l'aval du carter (3).

9. Structure d'accrochage (1) selon l'une quelconque des revendications 1 à 8, **caractérisée en ce que** le caisson comprend des moyens d'attache additionnels se présentant sous la forme d'au moins une bielle (6) disposée dans un plan sensiblement perpendiculaire à un axe longitudinal du turboréacteur (2), ladite bielle étant fixée par une première extrémité dans le caisson et est destinée à être fixée par une deuxième extrémité dans le carter (3),

10. Structure d'accrochage (1) selon la revendication 9, **caractérisée en ce que** la bielle (6) est disposée en partie supérieure du caisson sensiblement au voisinage des moyens d'attache au pylône (5).

11. Structure d'accrochage (1) selon l'une quelconque des revendications 1 à 10, **caractérisée en ce que** les moyens d'attache (201) au pylône (5) sont disposés sur une surface latérale aval (13) du caisson.

12. Structure d'accrochage (1) selon !'une quelconque des revendications 1 à 10, **caractérisée en ce que** les moyens d'attache au pylône (203) sont disposés sur une face supérieure (10) du caisson.

13. Structure d'accrochage (1) selon l'une quelconque des revendications 11 ou 12, **caractérisée en ce que** le caisson comprend des moyens d'attache additionnels se présentant sous la forme d'au moins une bielle (207) disposée sensiblement à proximité des moyens d'attache (201, 203) au pylône, ladite bielle étant fixée par une première extrémité dans le caisson et est destinée à être fixée par une deuxième extrémité dans ledit pylône (5).

14. Structure d'accrochage (1) selon l'une quelconque des revendications 11 à 13, **caractérisée en ce que** les moyens d'attache (201) au pylône comprennent au moins un groin de centrage (202).

15. Unité d'accrochage (200) pour turboréacteur (2) comprenant, d'une part, un pylône (5) lié à une structure fixe d'un avion, et d'autre part, une structure d'accrochage (1) selon l'une quelconque des revendications 1 à 14.

16. Unité d'accrochage (200) selon la revendication 15, **caractérisée en ce que** le pylône (5) déborde en amont de la structure d'accrochage (1).

17. Ensemble propulsif comprenant un turboréacteur (2) **caractérisé en ce que** le turboréacteur est lié à une unité d'accrochage (1) selon l'une quelconque des revendications 15 ou 16.

18. Ensemble propulsif selon la revendication 17, **caractérisé en ce qu'**il comprend une liaison arrière au moyen d'au moins un système de suspension (210) présentant une première extrémité liée au pylône (5) et une deuxième extrémité liée à une partie aval du turboréacteur (2).

## Patentansprüche

1. Aufhängestruktur (1, 100, 300) zum Aufhängen eines Turboluftstrahltriebwerks (2) an einer ortsfesten Struktur eines Flugzeugs anhand eines Aufhängeträgers (5), umfassend einen Kasten und Motoranbringungsmittel (4), die auf dem Kasten auf beiden Seiten einer im Wesentlichen längsgerichteten Achse des Turboluftstrahltriebwerks angeordnet sind und dazu gedacht sind, mit einem Teil des Turboluftstrahltriebwerks derart verbunden zu sein, dass sie die darauf einwirkenden Kräfte übernehmen, **dadurch gekennzeichnet, dass** die Struktur Mittel (201, 203) zum Anbringen des Kastens an dem Träger umfassen, und der Kasten einstückig ist und dazu gedacht ist, sich mindestens teilweise auf beiden Seiten eines Gehäuses (3) eines Gebläses des Turboluftstrahltriebwerks um eine im Wesentlichen längsgerichtete Achse desselben herum zu erstrecken.

2. Aufhängestruktur (1, 100) nach Anspruch 1, **dadurch gekennzeichnet, dass** die otoranbringungsmittel (4) dazu gedacht sind, mit einem Gehäuse (3) eines Gebläses verbunden zu sein.

3. Aufhängestruktur (1, 100) nach Anspruch 2, **dadurch gekennzeichnet, dass** die otoranbringungsmittel (4) dazu gedacht sind, an einem niederdruckseitigen Abschnitt des Gebläsegehäuses (3) befestigt zu sein.

4. Aufhängestruktur (300) nach Anspruch 1, **dadurch gekennzeichnet, dass** die Motoranbringungsmittel (4) dazu gedacht sind, mit dem Turboluftstrahltriebwerk (2) auf einer Hochdruckstufe (20) desselben verbunden zu sein.

5. Aufhängestruktur (1, 100, 300) nach einem der Ansprüche 1 bis 4, **dadurch gekennzeichnet, dass** die Motoranbringungsmittel (4) auf dem Kasten derart angeordnet sind, dass sie sich im Wesentlichen in einer waagerechten Ebene (P) in der Nähe einer mittleren Achse des Turboluftstrahltriebwerks (2) befinden.

6. Aufhängestruktur (1, 100, 300) nach einem der Ansprüche 1 bis 5, **dadurch gekennzeichnet, dass** die Motoranbringungsmittel (4) kugelgelenkartig sind.

7. Aufhängestruktur (1, 100, 300) nach einem der Ansprüche 1 bis 6, **dadurch gekennzeichnet, dass** sie zwei seitliche Motoranbringungsmittel (4) umfasst.

8. Aufhängestruktur (100) nach einem der Ansprüche 1 bis 6, **dadurch gekennzeichnet, dass** die Motoranbringungsmittel (4) an einem lokalen Ansatz (101) des Kastens angeordnet sind, der zur Niederdruckseite des Gehäuses (3) hin orientiert ist.

9. Aufhängestruktur (1) nach einem der Ansprüche 1 bis 8, **dadurch gekennzeichnet, dass** der Kasten zusätzliche Anbringungsmittel umfasst, die in Form mindestens einer Schubstange (6) vorliegen, die in einer Ebene angeordnet ist, die zu einer Längsachse des Turboluftstrahltriebwerks (2) im Wesentlichen rechtwinklig ist, wobei die Schubstange an einem ersten Ende in dem Kasten befestigt ist und dazu gedacht ist, an einem zweiten Ende in dem Gehäuse (3) befestigt zu sein.

10. Aufhängestruktur (1) nach Anspruch 9, **dadurch gekennzeichnet, dass** die Schubstange (6) in dem oberen Teil des Kastens im Wesentlichen in der Nähe der Mittel zum Anbringen an dem Träger (5) angeordnet ist.

11. Aufhängestruktur (1) nach einem der Ansprüche 1 bis 10, **dadurch gekennzeichnet, dass** die Mittel (201) zum Anbringen an dem Träger (5) auf einer niederdruckseitigen seitlichen Oberfläche (13) des Kastens angeordnet sind.

12. Aufhängestruktur (1) nach einem der Ansprüche 1 bis 10, **dadurch gekennzeichnet, dass** die Mittel (203) zum Anbringen an dem Träger auf einer oberen Fläche (10) des Kastens angeordnet sind.

13. Aufhängestruktur (1) nach einem der Ansprüche 11 oder 12, **dadurch gekennzeichnet, dass** der Kasten zusätzliche Anbringungsmittel umfasst, die in Form mindestens einer Schubstange (207) vorliegen, die im Wesentlichen in der Nähe der Mittel (201, 203) zum Anbringen an dem Träger angeordnet sind, wobei die Schubstange an einem ersten Ende in dem Kasten befestigt ist und dazu gedacht ist, an einem zweiten Ende in dem Träger (5) befestigt zu sein.

14. Aufhängestruktur (1) nach einem der Ansprüche 11 bis 13, **dadurch gekennzeichnet, dass** die Mittel (201) zum Anbringen an dem Träger mindestens einen Zentrierrüssel (202) umfassen.

15. Aufhängeeinheit (200) für ein Turboluftstrahltriebwerk (2), umfassend einerseits einen Träger (5), der mit einer ortsfesten Struktur eines Flugzeugs verbunden ist, und andererseits eine Aufhängestruktur (1) nach einem der Ansprüche 1 bis 14.

16. Aufhängeeinheit (200) nach Anspruch 15, **dadurch gekennzeichnet, dass** der Träger (5) hochdruckseitig über die Aufhängestruktur (1) übersteht.

17. Antriebseinheit, umfassend ein Turboluftstrahltriebwerk (2), **dadurch gekennzeichnet, dass** das Turboluftstrahltriebwerk mit einer Aufhängeeinheit (1) nach einem der Ansprüche 15 oder 16 verbunden ist.

18. Antriebseinheit nach Anspruch 17, **dadurch gekennzeichnet, dass** sie eine hintere Verbindung mittels mindestens eines Federungssystems (210) umfasst, das ein erstes Ende, das mit dem Träger (5) verbunden ist, und ein zweites Ende, das mit einem niederdruckseitigen Teil des Turboluftstrahltriebwerks (2) verbunden ist, aufweist.

## Claims

1. A structure (1, 100, 300) for hooking a turbojet engine (2) to a stationary structure of an aircraft by means of a hooking pylon (5), comprising a box and engine attachment means (4) arranged on the box on either side of an axis substantially longitudinal to the turbojet engine and intended to be connected to a part of the turbojet engine so as to absorb the efforts exerting thereon, **characterized in that** said structure includes means (201, 203) for attaching the box to the pylon, and the box is one-piece and is intended to extend at least partially on either side of a fan casing (3) of the turbojet engine around a substantially longitudinal axis of the latter.

2. The hooking structure (1, 100) according to claim 1, **characterized in that** the engine attachment means (4) are intended to be connected to a casing (3) of a fan.

3. The hooking structure (1, 100) according to claim 2, **characterized in that** the engine attachment means (4) are intended to be fixed on a downstream portion of the fan casing (3).

4. The hooking structure (300) according to claim 1, **characterized in that** the engine attachment means (4) are intended to be connected to the turbojet engine (2) at a high-pressure stage (20) of the latter.

5. The hooking structure (1, 100, 300) according to any one of claims 1 to 4, **characterized in that** the engine attachment means (4) are arranged on the box so as to be located substantially in a horizontal plane (P) close to a median axis of the turbojet engine (2).

6. The hooking structure (1, 100, 300) according to any one of claims 1 to 5, **characterized in that** the engine attachment means (4) are of the swiveling type.

7. The hooking structure (1, 100, 300) according to any one of claims 1 to 6, **characterized in that** it comprises two lateral engine attachment means (4).

8. The hooking structure (100) according to any one of claims 1 to 6, **characterized in that** the engine attachment means (4) are arranged at a local excrescence (101) of the box oriented downstream of the casing (3).

9. The hooking structure (1) according to any one of claims 1 to 8, **characterized in that** the box comprises additional attachment means in the form of at least one connecting rod (6) disposed in a plane substantially perpendicular to a longitudinal axis of the turbojet engine (2), said connecting rod being fixed by a first end in the box and is intended to be fixed by a second end in the casing (3).

10. The hooking structure (1) according to claim 9, **characterized in that** the connecting rod (6) is disposed in the upper part of the box substantially proximate to the pylon (5) attachment means.

11. The hooking structure (1) according to any one of claims 1 to 10, **characterized in that** the pylon (5) attachment means (201) are disposed on a lateral downstream surface (13) of the box.

12. The hooking structure (1) according to any one of claims 1 to 10, **characterized in that** the pylon attachment means (203) are disposed on an upper face (10) of the box.

13. The hooking structure (1) according to any one of claims 11 or 12, **characterized in that** the box comprises additional attachment means in the form of at least one connecting rod (207) substantially disposed in the vicinity of the pylon attachment means (201, 203), said connecting rod being fixed by a first end in the box and is intended to be fixed by a second end in said pylon (5).

14. The hooking structure (1) according to any one of claims 11 to 13, **characterized in that** the pylon (5) attachment means (201) comprise at least one centering snout (202).

15. A hooking unit (200) for a turbojet engine (2) comprising, on one hand, a pylon (5) connected to a stationary structure of an aircraft, and on the other hand, a hooking structure (1) according to any one of claims 1 to 14.

16. The hooking unit (200) according to claim 15, **characterized in that** the pylon (5) protrudes upstream of the hooking structure (1).

17. A propulsion assembly comprising a turbojet engine (2) **characterized in that** the turbojet engine is connected to a hooking unit (1) according to any one of claims 15 or 16.

18. The propulsion assembly according to claim 17, **characterized in that** it comprises a rear connection by means of at least one suspension system (210) having a first end connected to the pylon (5) and a second end connected to a downstream part of the turbojet engine (2).
